# EUROPÄISCHE PATENTANMELDUNG

(11) **EP 1 028 134 A1**
(43) Veröffentlichungstag der Anmeldung: **16.08.2000**
(21) Anmeldenummer: 00106008.6
(22) Anmeldetag: 18.08.1997
(51) Int. Cl.: C08G 18/50, C08G 65/26

(54) **Verfahren zur Herstellung von Polyurethanhartschaumstoffen**

(30) Priorität: 28.08.1996 DE 19634700
(62) Teilanmeldung aus: 97114241.9
(71) Anmelder: BAYER AG, 51368 Leverkusen (DE)
(72) Erfinder: Dietrich, Karl-Werner, Dr., 51519 Odenthal (DE); Heinemann, Torsten, Dr., 53721 Siegburg (DE); Dietrich, Manfred, Dr., 51373 Leverkusen (DE)

(57) **Zusammenfassung**

Beschrieben wird ein Verfahren zur Herstellung von Polyurethanhartschaumstoffen aus Polyolen und Polyisocyanaten, dadurch gekennzeichnet, daß der Polyurethanhartschaumstoff erhalten wird durch Umsetzung von
A) einer im Mittel mindestens zwei gegenüber Isocyanaten reaktive Wasserstoffatome aufweisenden Polyolkomponente, enthaltend
   1.
      a) 20-80 Gew.% eines Additionsproduktes mit einer OH - Zahl von mindestens 500 aus primäre und/oder sekundäre Aminogruppen aufweisenden Di- oder Polyaminen mit Alkylenoxiden
      b) 80-20 Gew.% Rizinusöl
         und/oder
      c) Reaktionsprodukte, die durch Reaktion der unter 1 a) genannten Additionsprodukte mit Rizinusöl erhalten werden;.
   2. gegebenenfalls weitere, mindestens zwei gegenüber Isocyanaten reaktive Wasserstoffatome aufweisende Verbindungen wie Polyetherpolyole oder Polyesterpolyole, sowie
   3. gegebenenfalls Treibmittel,
   4. Wasser,
   5. Katalysatoren und
   6. gegebenfalls Hufs- und Zusatzstoffe
   B) einem Polyisocyanat mit einem NCO - Gehalt von 20 bis 48 Gew.-%.

## Beschreibung

Die Erfindung betrifft ein Verfahren zur Herstellung von im wesentlichen geschlossenzelligen Polyurethanhartschaumstoffen.

Verfahren zur Herstellung von im wesentlichen geschlossenzelligen Urethan-, Harnstoff- und Biuretgruppen aufweisenden Hartschaumstoffen sind allgemein bekannt.

Eine Übersicht zur Herstellung entsprechender Hartschaumstoffe wird beispielsweise im Kunststoff-Handbuch, Band 7, 1. Auflage 1966, herausgegeben von R. Vieweg und A. Höchtlen und 2. Auflage 1983, herausgegeben von G. Oertel, gegeben (Carl Hanser Verlag, München).

Zur Herstellung derartiger Hartschaumstoffe werden üblicherweise aromatische Polyisocyanate mit Polyolen, vorzugsweise Polyether- oder Polyesterpolyolen, in Gegenwart von Treibmitteln, Katalysatoren und Hilfs- und Zusatzstoffen zur Reaktion gebracht.

Die früher bevorzugt als Treibmittel verwendeten Fluorchlorkohlenwasserstoffe wie R11 wurden insbesondere wegen ihrer ozonzerstörenden Eigenschaften durch teilhalogenierte Fluorchlorkohlenwasserstoffe (HFCKW) wie R 141b (1,1,1-Dichlofluorethan), Fluorkohlenwasserstoffe (HFKW) sowie niedrigsiedende Alkane wie n-Pentan, iso-Pentan, Cyclopentan ersetzt.

Polyurethanhartschaumstoffe finden Verwendung bei der Herstellung von Verbund- oder Sandwichelementen oder bei der Ausschäumung von Hohlräumen in Haushaltsgeräten, wie Kühlmöbeln, beispielsweise Kühlschränken oder -truhen, oder von Heißwasserspeichern.

In der Vergangenheit wurde der nachwachsende Rohstoff Rizinusöl, ein in der chemischen Industrie vielfältig eingesetztes Triglycerid, bei der Herstellung von Polyurethanen mitverwendet. Rizinusöl ist hierfür geeignet, weil es über etwa drei Hydroxylgruppen pro Molekül verfügt. Rizinusöl ließ sich allerdings bisher nicht in großen Mengen (mehr als 20 Gew.-% des Polyolanteils der Rezeptur) bei der Herstellung von Polyurethanhartschäumen verwenden, weil seine OH-Zahl zu niedrig ist, und die erhaltenen Hartschäume insbesondere bei Rohdichten von unter 50 kg/m³ eine unzureichende mechanische Stabilität aufweisen. Der Einsatz von hohen Anteilen des nachwachsenden Rohstoffes Rizinusöl bei der Herstellung von Polyurethanhartschaumstoffen ist aber aus wirtschaftlichen und ökologischen Gründen von Interesse.

Es war daher die Aufgabe der Erfindung, ein Verfahren zur Herstellung von Polyurethanhartschaumstoffen aufzufinden, das den Einsatz von mehr als 20 Gew.-% Rizinusöl, bezogen auf den Polyolanteil der Formulierung, ermöglicht und zu technisch problemlos einsetzbaren Produkten führt.

Überraschenderweise wurde gefunden, daß diese Aufgabe durch die Verwendung der erfindungsgemäßen Polyolformulierungen gelöst werden können.

Gegenstand der Erfindung ist ein Verfahren zur Herstellung von Polyurethanhartschaumstoffen aus Polyolen und Polyisocyanaten, dadurch gekennzeichnet, daß der Polyurethanhartschaumstoff erhalten wird durch Umsetzung von
A) einer im Mittel mindestens zwei gegenüber Isocyanaten reaktive Wasserstoffatome aufweisenden Polyolkomponente, enthaltend
   1.
      a) 20-80 Gew.% eines Additionsproduktes mit einer OH - Zahl von mindestens 500 aus primäre und/oder sekundäre Aminogruppen aufweisenden Di- oder Polyaminen mit Alkylenoxiden
      b) 80-20 Gew.% Rizinusöl
         und/oder
      c) Reaktionsprodukte, die durch Reaktion der unter 1 a) genannten Additionsprodukte mit Rizinusöl erhalten werden.
   2. gegebenenfalls weitere, mindestens zwei gegenüber Isocyanaten reaktive Wasserstoffatome aufweisende Verbindungen wie Polyetherpolyole oder Polyesterpolyole, sowie
   3. gegebenenfalls Treibmittel,
   4. Wasser,
   5. Katalysatoren und
   6. gegebenenfalls Hilfs- und Zusatzstoffe
   mit
B) einem Polyisocyanat mit einem NCO - Gehalt von 20 bis 48 Gew.-%.

Die für die Komponenten A1a) und A2b) angegebenen Gew.-% beziehen sich auf den Polyolanteil der Komponente A), also auf die Summe der Komponenten A1) und A2).

Erfindungsgemäße Polyolformulierungen A) enthalten als Komponente 1a) Reaktionsprodukte aus primäre und/oder sekundäre Hydroxylgruppen aufweisenden Di- oder Polyaminen mit Alkylenoxiden. Diese Reaktionsprodukte weisen OH-Zahlen von mindestens 500 auf. Als Alkylenoxide werden beispielsweise Ethylenoxid, Propylenoxid, Butylenoxid, Dodecyloxid oder Styroloxid, vorzugsweise Propylenoxid oder Ethylenoxid verwendet. Als Starterverbindungen werden Di- oder Polyamine verwendet, die mindestens eine primäre oder sekundäre Aminogruppe aufweisen, wie beispielsweise aliphatische Amine wie Ethylendiamin, Oligomere des Ethylendiamins (beispielsweise Diethylentriamin, Triethylenteramin oder Pentaethylenhexamin), Ethanolamin, Diethanolamin, 1,3-Propylendiamin, 1,3- bzw. 1,4-Butylendiamin, 1,2-1,3-, 1,4-, 1,5-, 1,6-Hexamethylendiamin, aromatische Amine wie Phenylendiamine, Toluylendiamine (2,3-Toluylendiamin, 3,4-Toluylendiamin, 2,4-Tolnylendiamin, 2,5-Toluylendiamin 2,6-Toluylendiamin oder Gemische der genannten Isomeren), 2,2'-Diaminodiphenylmethan, 2,4'-Diaminodiphenylmethan, 4,4'-Diaminodiphenylmethan oder Gemische dieser Isomeren.

Als Komponente 1a) wird bevorzugt ein Polyadditionsprodukt aus 2 bis 4 mol Alkylenoxiden, besonders bevorzugt 3 bis 3,8 mol, und ein Isomerengemisch aus 2,3- und 3,4-Toluylendiamin verwendet.

Als gegebenenfalls mitzuverwendende Ausgangskomponente (2) für die Schaumstoffherstellung finden Verbindungen mit mindestens zwei gegenüber Isocyanaten reaktionsfähigen Wasserstoffatomen von einem Molekulargewicht in der Regel von 200 bis 12500 g/mol Verwendung. Hierunter versteht man neben Aminogruppen, Thiolgruppen oder Carboxylgruppen aufweisende Verbindungen, vorzugsweise Hydroxygruppen aufweisende Verbindungen, insbesondere 2 bis 8 Hydroxylgruppen aufweisende Verbindungen, speziell solche vom Molekulargewicht 300 bis 2000, z. B. mindestens 2, in der Regel 2 bis 8 Hydroxylgruppen aufweisende Polyether oder Polyester sowie Polycarbonate oder Polyesteramide, wie sie für die Herstellung homogener und von zellförmigen Polyurethanen an sich bekannt sind und wie sie z. B. in der DE-A 28 32 253, Seiten 11-18, beschrieben werden.

Wasser kann in einer Menge von 1 bis 7 Gew.-%, bezogen auf die Summe der Komponenten A1) und A2), enthalten sein.

Als gegebenenfalls mitzuverwendende Treibmittel finden die üblicherweise für das Aufschäumen von Polyurethanhartschaumstoffen eingesetzten Treibmittel Verwendung. Beispiele für Treibmittel sind Wasser, Alkane wie n-Pentan, iso-Pentan, Gemische aus iso- und n-Pentan, Cyclopentan, Cyclohexan, Mischungen aus Butanisomeren und den genannten Alkanen, teilhalogenierte Fluorchlokohlenwasserstoffe wie 1,1,1-Dichlorfluorethan (R 141b), teilfluorierte Kohlenwasserstoffe wie 1,1,1,3,3,3-Hexafluorbutan (R 356) oder 1,1,1,3,3-Pentafluorpropan (R 245 fa). Bevorzugt werden Cyclopentan, n-Pentan, iso-Pentan einzeln oder als Gemisch, gegebenenfalls in der Abmischung mit Wasser, eingesetzt.

Üblicherweise wird das gegebenenfalls mit zu verwendende Treibmittel in einer Menge von 1 bis 20 Gew.-%, bezogen auf die Summe der Komponenten A1) und -A2), eingesetzt.

Erfindungsgemäß werden die in der Polyurethanchemie an sich üblichen Katalysatoren in einer Menge von 0,1 bis 4 Gew.-%, bezogen auf die Summe der Komponenten A1) und A2), mitverwendet.

Als Isocyanat-Komponente B) sind z. B. aromatische Polyisocyanate möglich, wie sie z. B. von W. Siefken in Justus Liebigs Annalen der Chemie, 562, Seiten 75 bis 136, beschrieben werden, beispielsweise solche der Formel

Q(NCO)ₙ,

in der
- n: 2 bis 4, vorzugsweise 2, und
- Q: einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einem aromatischen Kohlenwasserstoffrest mit 8 bis 15, vorzugsweise 8 bis 13, C-Atomen bedeuten, z. B. solche Polyisocyanate, wie sie in der DE-OS 28 32 253, Seiten 10 bis 11, beschrieben werden.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate", insbesondere modifizierte Polyisocyanate, die sich vom 2,4- und 2,6-Toluylendiisocyanat bzw. vom 4,4'- und/oder - 2,4'-Diphenylmethandiisocyanat ableiten.

Verwendet werden können auch Prepolymere aus den genannten Isocyanaten und organischen Verbindungen mit mindestens einer Hydroxylgruppe, wie beispielsweise 1-4 Hydroxylgruppen aufweisende Polyol- oder Polyesterkomponenten vom Molekulargewicht 60 - 1400.

Als gegebenenfalls mitzuverwendende Hilfs- und Zusatzstoffe können Paraffine, Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide, mitverwendet werden.

Weitere Beispiele von gegebenenfalls erfindungsgemäß mitzuverwendenden oberflächenaktiven Zusatzstoffen sind Schaumstabilisatoren, Zellregler, Reaktionsverzögerer, Stabilisatoren, flammhemmende Substanzen, Farbstoffen und Füllstoffen sowie fungistatisch und bakteriostatisch wirksamen Substanzen. Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1966, z. B. auf den Seiten 121 bis 205, und 2. Auflage 1983, herausgegeben von G. Qertel (Carl Hanser Verlag, München) beschrieben.

Bei der Schaumherstellung kann die Verschäumung auch in geschlossenen Formen durchgeführt werden. Dabei wird das Reaktionsgemisch in eine Form eingetragen. Als Formmaterial kommt Metall, z. B. Aluminium, oder Kunststoff, z. B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß geht man im erstgenannten Fall so vor, daß man in die Form so viel schäumfähiges Reaktionsgemisch einträgt, daß der gebildete Schaumstoff die Form gerade ausfüllt. Die Arbeitsweise im letztgenannten Fall besteht darin, daß man mehr schäumfähiges Reaktionsgemisch in die Form einträgt, als zur Ausfüllung des Forminneren mit Schaumstoff notwendig ist. Im letzteren Fall wird somit unter "overcharging" gearbeitet, eine derartige Verfahrensweise ist z. B. aus den US-A 3 178 490 und 3 182 104 bekannt.

Selbstverständlich können auch Schaumstoffe durch Blockverschäumung oder nach dem an sich bekannten Doppeltransportbandverfahren hergestellt werden.

Die nach der Erfindung erhältlichen Hartschaumstoffe finden Anwendung z. B. im Bauwesen sowie für die Dämmung von Fernwärmerohren und Containern.

Gegenstand der Erfindung ist weiterhin die Verwendung der erfindungsgemäß hergestellten Hartschaumstoffe als Dämmstoff, z. B. Zwischenschicht für Verbundelemente und/oder zur Verstärkung mechanischer Konstruktionsteile.

Vorzugsweise wird das erfindungsgemäße Verfahren zur Ausschäumung von Hohlräumen von Kühl- und Gefriergeräten verwendet.

### Beispiele

### Polyol A:

In einem für Umsetzungen mit Alkylenoxiden geeignetem 100 l Reaktor werden 9 kg eines Isomerengemisches aus 2,3- und 3,4-Toluylendiamin vorgelegt und nach gründlichem Spülen mit Stickstoff bei 90 bis 150°C und 2 bis 4 bar Stickstoff inerhalb von 2 Stunden 15 kg Propylenoxid (3,5 Mol/Mol Toluylendiamin) zudosiert. Nach 2 Stunden Nachreaktion wird das Reaktionsgemisch abgekühlt. Man erhält 24 kg eines Polyether mit folgenden analytischen Daten:
OH-Zahl: 605
Viskosität: 2200 mPas (75°C)

### Polyol B:

Sucrose, Ethylenglykol, Wasser gestarteter Polyether vom Molekulargewicht 350, erhalten durch anionische Polyaddition mit 1,2-Propylenoxid.

### Beispiel 1 (nicht erfindungsgemäß)

### Rezeptur für Polyurethanhartschaumstoff

### Komponente A

50 Gew. Tle. Rizinusöl
50 Gew. Tle. Polyol B
2 Gew. Tle. Silikonstabilisator (B8423, Fa. Goldschmidt)
3 Gew. Tle. Aktivator Desmorapid 726b (Fa. Bayer AG)
2 Gew. Tle. Wasser

100 Gew.Tle. Komponente A werden mit 12 Gew.Teilen Cyclopentan und 100 Gew.Teilen rohem MDI (Desmodur 44V20, Fa. Bayer AG) als Komponente B) mittels eines Rührers (2000 UpM) bei 20°C gemischt. Danach wird die Mischung zum Aufschäumen in eine offene Form der Grundfläche 20*20 cm² gegeben.

Nach dem Ende der Reaktion erhält man eine teilweise kollabierte, grobzellige, zähe Masse.

### Beispiel 2 (erfindungsgemäß)

### Rezeptur für Polyurethanhartschaumstoff

### Komponente A

50 Gew. Tle. Rizinusöl 50 Gew. Tle. Polyol A
2 Gew. Tle. Silikonstabilisator (B8423, Fa. Goldschmidt)
3 Gew. Tle. Aktivator Desmorapid 726b (Fa. Bayer AG)
2 Gew. Tle. Wasser

100 Gew.Tle. Komponente A werden mit 14 Gew.Teilen Cyclopentan und 110 Gew.Teilen rohem MDI (Desmodur 44V20, Fa. Bayer AG) als Komponente B) mittels eines Rührers (2000 UpM) bei 20°C gemischt. Danach wird die Mischung zum Aufschäumen in eine offene Form der Grundfläche 20*20 cm² gegeben.

Nach dem Aufschäumen erhält man einen feinzelligen Polyurethanhartschaumstoff.

### Beispiel 3 (erfindungsgemäß)

### Rezeptur für Polyurethanhartschaumstoff

### Komponente A

40 Gew. Tle. Rizinusöl 40 Gew. Tle. Polyol A
20 Gew. Tle Polyol B
2 Gew. Tle. Silikonstabilisator (B8423, Fa. Goldschmidt)
3 Gew. Tle. Aktivator Desmorapid 726b (Fa. Bayer AG)
2 Gew. Tle. Wasser

100 Gew.Tle. Komponente A werden mit 14 Gew.Teilen Cyclopentan und 112 Gew.-Teilen rohem MDI (Desmodur 44V20, Fa. Bayer AG) als Komponente B) mittels eines Rührers (2000 UpM) bei 20°C gemischt. Danach wird die Mischung zum Aufschäumen in eine offene Form der Grundfläche 20*20 cm² gegeben.

Nach dem Aufschäumen erhält man einen feinzelligen Polyurethanhartschaumstoff.

Die Beispiele zeigen, daß bei hohen Einsatzmengen Rizinusöl (mehr als 20 Gew.-%, bezogen auf den Polyolanteil der Komponente A) nach dem erfindungsgemäßen Verfahren feinzellige Polyurethanhartschaumstoffe erhalten werden können.

## Patentansprüche

1. Polyadditionsprodukt aus Alkylenoxiden an ein Isomerengemisch aus 2,3- und 3,4-Toluylendiamin, erhältlich durch Umsetzung von 2 bis 4 mol Alkylenoxid pro mol Isomerengemisch.

2. Polyadditionsprodukt nach Anspruch 1, erhältlich durch Umsetzung von 3 bis 3,8 mol Alkylenoxid pro mol Isomerengemisch.

3. Verwendung des Polyadditionsprodukt nach Anspruch 1 als Bestandteil der Polyol-Komponente für die Herstellung von Polyurethan-Hartschaumstoffen.
